# EUROPEAN PATENT SPECIFICATION

(11) **EP 1 159 871 B1**
(45) Date of publication and mention of the grant of the patent: **19.03.2003**
(21) Application number: 01202063.2
(22) Date of filing: 30.05.2001
(51) Int. Cl.: A01K 1/015, A01K 1/01, A01C 3/02

(54) **Stall for separating manure**
Stall zum Trennen von Dung
Etable pour la séparation du fumier

(30) Priority: 30.05.2000 NL 1015343
(43) Date of publication of application: 05.12.2001
(73) Proprietor: Instituut voor Milieu-en Agritechniek ( IMAG) B.V., 6708 PA Wageningen (NL)
(72) Inventor: Swierstra, Durk, 6716 MH Ede (NL)
(74) Representative: Jorritsma, Ruurd

(56) References cited:
- NL-A- 8 900 860
- NL-C- 1 003 271
- US-A- 5 817 241

## Description

The present invention relates to a stall provided with a floor element having a series of mutually parallel slots, which slots terminate at a side edge of the floor element, and perforations distributed over the floor, as well as a pit located beneath the floor for collecting liquid manure issuing through the perforations, as well as a scraper that can be moved over the floor in a longitudinal direction of the slots.

A pit for collecting and storing manure is usually located beneath a floor on which animals can walk in stalls for cattle or pigs. Such a floor is then usually provided with slots through which the manure and urine are discharged to the pit below. Such a floor is termed a grating floor or a slotted floor.

A floor of this type is described in NL-A 1 003 271 in the name of the Applicant.

NL 1 003 271 discloses how the emission of ammonia from a manure store located below the stall floor can be reduced by the use of solid floors with perforations and slots and a dung scraper on the floor. It has also been found with this arrangement that these floors are advantageous for walking on by the animals.

The aim of the present invention is to provide an installation in a stall for cattle or pigs with which primary separation of manure (as close as possible to the source) into a low viscosity fraction, liquid manure, and a high viscosity fraction, solid manure, integrated with the reduction in the emission of ammonia, can be employed in a stall. A further aim of the present invention is as far as possible to maintain the various concentrations of the original faeces and urine in the liquid manure and solid manure collected, as a result of which the commercial sales of and possibilities for processing the manure are promoted.

To this end the invention is characterised in that a manure collection channel is arranged along the side edge of the floor element to receive manure scraped off the floor element by the scraper, which manure collection channel is separate from the pit.

As a result of the use of the perforated slotted floor, the solid manure fraction can be efficiently separated close to the source, by means of the scraper, from the liquid manure fraction that is collected in the pit and optionally discharged therefrom via a liquid manure collection channel. As a result of the relatively solid nature of the floor element, the emission of ammonia remains restricted.

It is pointed out that it is known from NL-A 1 004 887, in the name of the Applicant, in cattle and pig rearing to separate manure into a low viscosity fraction, the liquid manure, and a high viscosity fraction, the solid manure, by means of a filter cloth located beneath a grating floor of a stall floor or by means of a perforated or unperforated conveyor belt. With this arrangement the solid manure and the liquid manure drop through the gratings in the stall floor, after which the-liquid manure-passes through or from the conveyor element into a discharge channel. The solid manure is removed by the transport element to the collection channel for the solid manure.

The use of a largely closed floor element provided with longitudinal slots and perforations distributed over the surface is not apparent from this construction.

The invention is explained below with reference to the drawing which indicates the various possibilities diagrammatically. In the drawing:
Figure 1 shows a diagrammatic plan view of the present invention in a stall for cattle,
Figure 2 shows a cross-section of the floor according to the present invention along the line I-I or I'-I' in Figure 1.
Figure 3 shows a longitudinal section of the present invention along the line II-II or II'-II' in Figure 1, with a separate collection chamber for the liquid manure located beneath the floor and a storage chamber for the solid manure,
Figure 4 shows an embodiment in which the perforations are closed off by a closure mechanism,
Figure 5 shows an alternative embodiment in which the liquid manure is collected in a sewage system.

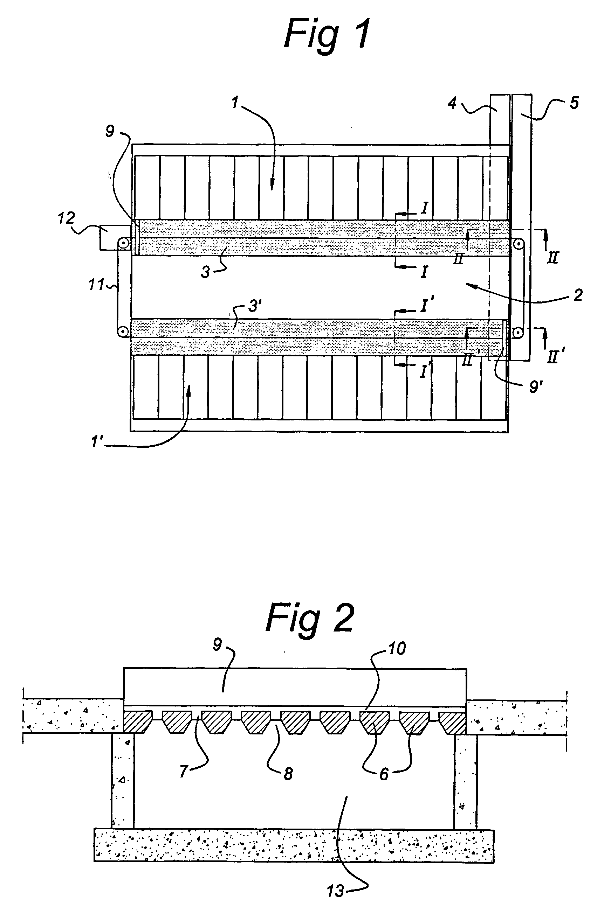

The floor plan shown in Figure 1 consists of cubicles 1, 1', the feeding walkway 2 and the walkways 3, 3' for the cows, which walkways 3, 3' arc provided with slotted floor elements and a dung scraper 9, 9'. The liquid manure collection channel 4 and the manure collection channel 5 are located at the end of the stall. The manure is pushed by the dung scraper 9, 9', pulled over the floor elements by a chain or rod 11, driven by a drive station 12, to the manure collection channel 5.

Figure 2 shows a cross-section through the floor elements in Figure 1 along the line I-I or I'-I'. The dung scraper 9 runs over the floor elements 6, provided with slots 7 and perforations 8. The perforations are preferably of wedge-shaped construction to prevent clogging. The spacing between the perforations 8 in the direction transverse to the scraping direction of the dung scraper 9 which has a preferred dimension of 0.12 m can vary from 0.05 m to 0.20 m and in the direction parallel to the scraping direction with a preferred dimension of 1.1 m can vary from 0.3 m to 1.5 m. The dung scraper 9 is provided with a rubber profile 10 or similar profile by means of which the slots 7 and the perforations 8 are cleaned. The liquid manure runs through the perforations 8 in the floor elements into the liquid manure collection pit 13 below.

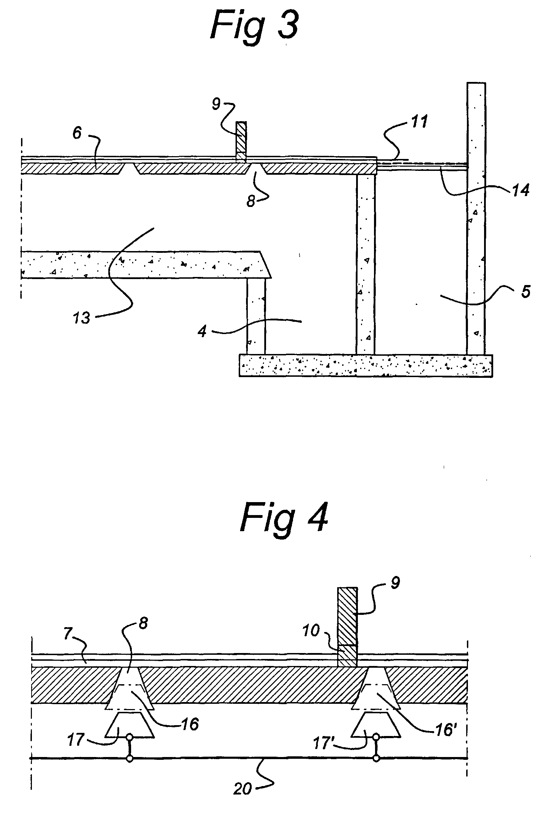

Figure 3 shows a longitudinal section through the walkway 3 with the slotted floor elements 6 of Figure 1 along the line II-II or II'-II'. The dung scraper 9, which is pulled along by a chain or a rod 11, runs over the floor elements 6. The liquid manure runs via the slots through the perforations 8 to the liquid manure collection pit 13 below, which is connected to the liquid manure collection channel 4. The solid manure is pushed to the end of the walkway, where the solid manure is removed through a manure grating 14 to the manure collection channel 5, where the manure can be stored.

Figure 4 shows an alternative construction for closing off the perforations 8 in the slotted floor elements 6. The closures 15, which preferably are wedge-shaped, can close off the perforations by moving said closures into the perforations, in position 16, by means of an operating mechanism 17. The operating mechanism can be operated centrally by means of a common connecting rod 18.

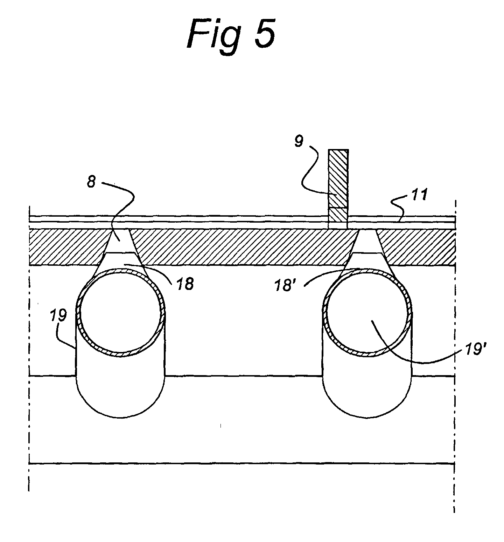

Figure 5 shows an alternative possibility for discharging the separated liquid manure by means of a sewage system. The discharge system is connected, per perforation 8, by means of trapezium-shaped connectors 18 to the perforations 8 of the slotted floor. The perforations that are in one line at right angles to the scraping direction of the dung scraper 9 are connected to a common connecting pipe 19 which is connected to the main discharge line 20 through which the liquid manure is discharged to a larger store.

## Claims

1. Stall provided with a floor element (6) having a series of mutually parallel slots (7), which slots terminate at a side edge of the floor element, and perforations (8) distributed over the floor, as well as a pit (13) located beneath the floor for collecting liquid manure issuing through the perforations, as well as a scraper (9) that can be moved over the floor in a longitudinal direction of the slots, **characterised in that** a manure collection channel (5) is arranged along the side edge of the floor element (6) to receive manure scraped off the floor elements (6) by the scraper (9), which manure collection channel (5) is separate from the pit (13).

2. Stall according to Claim 1, **characterised in that** a liquid manure collection channel (4) connected to the pit (13) is located parallel to the manure collection channel (5).

3. Stall according to Claim 1 or 2, **characterised in that** the spacing between the perforations (8) in a direction transverse to the slots (7) is between 0.05 m and 0.20 m, preferably 0.12 m, and in the longitudinal direction of the slots (7) is between 0.3 m and 1.5 m, preferably 1.1 m.

4. Stall according to one of the preceding claims, **characterised in that** the stall is provided with a manure transport system for discharging the manure from the manure collection channel (5) to a manure store located outside the stall.

5. Stall according to one of the preceding claims, **characterised in that** the perforations (8) in the floor elements (6) can be closed off by preferably wedge-shaped closures (15) and can be opened or closed by means of an operating mechanism (17).

6. Stall according to one of the preceding claims, **characterised in that** the floor elements (6) are made of concrete.

## Patentansprüche

1. Stallbox, die mit einem Bodenelement (6) mit einer Reihe zueinander paralleler Schlitze (7), wobei die Schlitze an einem seitlichen Rand des Bodenelementes enden, und Löchern (8), die über den Boden verteilt sind, sowie mit einer Grube (13), die unter dem Boden angeordnet ist, um Flüssigdünger aufzufangen, der über die Löcher austritt, und mit einem Schaber (9) versehen ist, der in einer Längsrichtung der Schlitze über den Boden bewegt werden kann, **dadurch gekennzeichnet, dass** ein Dünger-Auffangkanal (5) an dem seitlichen Rand des Bodenelementes (6) angeordnet ist, um von den Bodenelementen (6) mit dem Schaber (9) abgeschabten Dünger aufzunehmen, wobei der Dünger-Auffangkanal (5) von der Grube (13) getrennt ist

2. Stallbox nach Anspruch **1, dadurch gekennzeichnet, dass** ein Rassigdünger-Auffangkanal (4), der mit der Grube (13) verbunden ist, parallel zu dem Dünger-Auffangkanal (5) angeordnet ist

3. Stallbox nach Anspruch 1 oder 2, **dadurch gekennzeichnet, dass** der Abstand zwischen den Löchern (8) in einer Richtung quer zu den Schlitzen (7) zwischen 0,05 m und 0,20 m, vorzugsweise 0,12 m, beträgt und in der Längsrichtung der Schlitze (7) zwischen 0,3 m und 1,5 m, vorzugsweise 1,1 m, beträgt.

4. Stallbox nach einen der vorangehenden Ansprüche, **dadurch gekennzeichnet, dass** die Stallbox mit einem Düngertransportsystem versehen ist, mit dem der Dünger aus dem Dünger-Auffängkanal (5) zu einem Düngerspeicher abgeleitet wird, der sich außerhalb der Stallbox befindet

5. Stallbox nach einen der vorangehenden Ansprüche, **dadurch gekennzeichnet, dass** die Löcher (8) in den Bodenelementen (6) mit vorzugsweise keilförmigen Verschlüssen (15) verschlossen werden können und mittels eines Betätigungsmechanismus (17) geöffnet oder geschlossen werden können.

6. Stallbox nach einem der vorangehenden Ansprüche, **dadurch gekennzeichnet, dass** die Bodenelemente (6) aus Beton bestehen.

## Revendications

1. Etable munie d'un élément de sol (6) ayant une série de fentes mutuellement parallèles (7), lesquelles fentes se terminent au niveau d'une arête latérale de l'élément de sol, et des perforations (8) réparties sur le sol, ainsi qu'une fosse (13) située en dessous du sol pour collecter du fumier liquide sortant au travers des perforations, ainsi qu'un racloir (9) pouvant être déplacé sur le sol dans une direction longitudinale des fentes, **caractérisée en ce qu'**un canal de collecte de fumier (5) est disposé le long de l'arête latérale de l'élément de sol (6) pour recevoir du fumier raclé des éléments de sol (6) par le racloir (9), lequel canal de collecte de , fumier (5) est séparé de la fosse (13).

2. Etable selon la revendication 1, **caractérisée en ce qu'**un canal de collecte de fumier liquide (4) connecté à la fosse (13) est situé de manière parallèle au canal de collecte de fumier (5).

3. Etable selon la revendication 1 ou la revendication 2, **caractérisée en ce que** l'espacement entre les perforations (8) dans une direction transversale aux fentes (7) est comprise entre 0,05 m et 0,20 m, de préférence 0,12 m, et dans la direction longitudinale aux fentes (7) est comprise entre 0,3 m et 1,5 m, de préférence 1,1 m.

4. Etable selon l'une quelconque des revendications précédentes, **caractérisée en ce que** l'étable est munie d'un système de transport de fumier pour évacuer le fumier depuis le canal de collecte de fumier (5) vers un dispositif de stockage de fumier situé à l'extérieur de l'étable.

5. Etable selon l'une quelconque des revendications précédentes, **caractérisée en ce que** les perforations (8) dans les éléments de sol (6) peuvent être fermées par des fermetures ayant de préférence la forme d'une cale (15) et peuvent être ouvertes ou fermées au moyen d'un mécanisme de fonctionnement (17).

6. Etable selon l'une quelconque des revendications précédentes, **caractérisée en ce que** les éléments de sol (6) sont en béton.
